# DEMANDE DE BREVET EUROPEEN

(11) **EP 1 961 956 A1**
(43) Date de publication de la demande: **27.08.2008**
(21) Numéro de dépôt: 08300100.8
(22) Date de dépôt: 19.02.2008
(51) Int. Cl.: F03D 1/04, F03D 3/04

(54) **Eolienne d'axe vertical**

(30) Priorité: 22.02.2007 FR 0753426; 11.02.2008 FR 0850827
(71) Demandeur: Lecanu, Pierre, 14400 Esquay sur Seulles (FR); Quemere, Eric, 95240 Cormelles en Paris (FR)
(72) Inventeur: Lecanu, Pierre, 14400 Esquay sur Seulles (FR); Quemere, Eric, 95240 Cormelles en Paris (FR)
(74) Mandataire: Livet, Marie-José

(57) **Abrégé**

Eolienne d'axe vertical comportant un rotor actionné par le vent ainsi qu'un aérogénérateur coopérant avec le rotor pour fournir de l'énergie électrique, caractérisée en ce qu'elle est intégrée dans la construction d'un bâtiment et en particulier implantée au dernier étage d'un immeuble d'habitation collective, en zone urbaine, et elle est équipée d'une embase de canalisation du vent (3) essentiellement cylindrique, montée coaxialement au rotor (1 ; 13, 14) et constituée par deux capots de révolution, à savoir un capot supérieur (4) muni d'une ouverture médiane (7) et un capot inférieur (5) fermé, reliés par une série de plaquettes déflectrices verticales fixes (6) identiques dirigées radialement de façon à permettre de guider le vent pénétrant dans l'embase de canalisation (3) par la surface latérale de cette embase vers la partie centrale de celle-ci et l'ouverture médiane (7) du capot supérieur (4) en l'accélérant.

## Description

La présente invention a pour objet une éolienne d'axe vertical comportant un rotor actionné par le vent ainsi qu'un aérogénérateur coopérant avec le rotor pour fournir de l'énergie électrique.

Les spécialistes cherchent depuis longtemps à récupérer l'énergie éolienne qui a l'avantage d'être propre, c'est-à-dire de ne pas engendrer de pollution thermique ou chimique, et parallèlement d'être inépuisable.

Ces avantages sont toutefois compensés dans une large mesure par une série d'inconvénients liés en particulier au caractère dispersé et intermittent du vent.

Il est en outre bien connu que les « parcs » d'éoliennes consomment beaucoup d'espace et ne fonctionnent pas sans nuisances sonores.

A ces nuisances sonores s'ajoutent des problèmes écologiques notamment consécutifs aux risques encourus par les oiseaux à proximité des éoliennes.

Ces inconvénients font que le marché des éoliennes n'a pas connu ces dernières années l'essor auquel on aurait pu s'attendre, et que l'intégration des éoliennes en milieu urbain est actuellement très limitée, de sorte que les perspectives de développement dans ce domaine sont aujourd'hui très larges.

La présente invention a pour objet de remédier aux inconvénients susmentionnés en proposant une éolienne d'axe vertical, moins encombrante à puissance égale et moins bruyante que les éoliennes proposées jusqu'à ce jour, et en outre susceptible d'être implantée en milieu urbain.

Selon l'invention, une telle éolienne est caractérisée en ce qu'elle est intégrée dans la construction d'un bâtiment et en particulier implantée au dernier étage d'un immeuble d'habitation collective en zone urbaine.

Selon l'invention, cette éolienne est équipée d'une embase de canalisation du vent essentiellement cylindrique, montée coaxialement au rotor et constituée par deux capots de révolution, à savoir un capot supérieur muni d'une ouverture médiane et un capot inférieur fermé, reliés par une série de plaquettes déflectrices verticales fixes identiques dirigées radialement de façon à permettre de guider le vent pénétrant dans l'embase de canalisation par la surface latérale de cette embase vers la partie centrale de celle-ci et l'ouverture médiane du capot supérieur en l'accélérant.

L'éolienne selon l'invention peut être intégrée à la partie supérieure de bâtiments qui ont une ou plusieurs pente(s), par exemple de bâtiments ayant une seule pente de toiture, mais de grande longueur de façon à permettre de monter plusieurs éoliennes côte à côte.

Une telle éolienne est toutefois de préférence implantée en zone urbaine, au dernier étage d'immeubles d'habitation collective pouvant être de grande hauteur.

Le dernier étage de tels immeubles peut à titre d'exemple être totalement utilisé pour l'implantation d'éoliennes de ce type.

Une autre possibilité consiste à rajouter à un bâtiment ancien un étage supplémentaire réservé à l'implantation d'au moins une éolienne conforme à l'invention.

Un tel étage supplémentaire peut également comporter des emplacements destinés à des infrastructures telles que motorisation d'ascenseurs ou autres locaux techniques.

Il est dans tous les cas nécessaire de prévoir des moyens permettant de canaliser l'air vers le rotor de l'éolienne.

L'éolienne conforme à l'invention présente par ailleurs l'avantage de permettre de récupérer les vents dirigés dans tous les sens, y compris les vents ascendants, même lorsque leur direction n'est pas stable.

De tels vents ascendants sont en particulier dus à la présence du bâtiment sur lequel est montée l'éolienne, qui peut être de grande hauteur.

De plus, dans le cas de parois d'immeubles exposées au soleil, il se crée une circulation d'air montante.

Selon l'invention, l'ouverture médiane du capot supérieur peut avantageusement être munie à sa partie externe d'une collerette dont la section se rétrécit de préférence en allant vers l'extérieur.

Il est à noter que le fait de rétrécir la section de sortie du vent par rapport à sa section d'entrée permet d'en accroître la vitesse.

Une telle accélération du vent conduit à une augmentation notable du rendement de l'éolienne.

Selon une première variante de l'invention, le rotor est constitué par une hélice équipée de pales, logée dans la collerette et entraînant l'aérogénérateur.

Compte tenu de l'accélération du vent, une telle hélice peut comporter un plus grand nombre de pales que les hélices classiques fonctionnant avec des vitesses de vent plus faibles, donc soumises à des perturbations plus importantes, de façon à augmenter le couple et par suite à améliorer le rendement.

Selon une seconde variante de l'invention, le rotor est constitué par une turbine à aubes verticales montée à la partie interne de l'embase de canalisation du vent, au centre de cette embase, et dont les aubes sont solidaires d'un plateau qui entraîne l'aérogénérateur.

Conformément à cette variante, le rotor est totalement intégré à la partie interne de l'embase de canalisation du vent, et les aubes de celui-ci sont situées directement en arrière des plaquettes déflectrices verticales.

Cette seconde variante de l'invention présente l'avantage de permettre de disposer de rotors ayant de plus grands diamètres et donc d'avoir des couples de travail plus importants, mais au prix de vitesses de rotation plus faibles.

Selon une autre caractéristique s'appliquant à la première ainsi qu'à la seconde variante de l'invention, la collerette se prolonge vers l'extérieur par une cheminée divergente qui permet d'éviter la présence d'une zone d'écoulement perturbée au-dessus de l'éolienne donc de diminuer l'émission de bruits.

Il est à noter que les différents éléments constitutifs de l'éolienne peuvent avantageusement être constitués par des plaques jointives.

On peut également envisager de réaliser l'éolienne, partiellement ou en totalité à partir de tôles ou de matériaux composites permettant d'obtenir des formes gauches, proches de l'écoulement hydraulique, mais les coûts sont alors notablement plus importants.

Selon l'invention, l'embase de canalisation du vent ou l'ensemble embase/rotor/aérogénérateur peut avantageusement être fixé à un support par l'intermédiaire de plots élastiques pouvant avoir une configuration quelconque (caoutchouc, ressort, lame, ...).

Les bruits produits par l'éolienne peuvent ainsi être essentiellement dirigés vers le haut ; la présence des plots élastiques permet en effet de limiter dans une large mesure l'émission de bruits vers le bas.

Il est en effet à noter que les bruits générés par la circulation d'air provoquée par le rotor se propagent vers la sortie de la cheminée et sont donc orientés vers le haut.

Les bruits mécaniques consécutifs à la rotation des différents composants de l'éolienne génèrent quant à eux des vibrations qui sont amorties par les plots élastiques.

Il est à noter que selon la dimension de l'éolienne, il peut s'avérer plus simple d'isoler l'ensemble de celle-ci, en particulier lorsqu'elle est intégrée à un immeuble.

Selon une autre caractéristique de l'invention, les entrées et les sorties d'air de l'éolienne, c'est-à-dire la périphérie de l'embase de canalisation du vent et l'ouverture médiane du capot supérieur ou l'ouverture supérieure de la cheminée, sont équipées de grilles de protection ayant pour fonction première d'éviter que les oiseaux puissent être blessés ou tués par le rotor de l'éolienne.

Les grilles permettent en outre de garantir la protection du personnel et des usagers en les empêchant de s'approcher des pièces tournantes.

L'éolienne selon l'invention qui permet de récupérer le vent sur de grandes sections d'entrée et peut avoir une puissance importante présente en outre l'avantage de ne pas comporter de rotor apparent.

Compte tenu de la faiblesse du niveau des bruits qu'elle engendre, une telle éolienne peut facilement être implantée en zone urbaine, en particulier au niveau du toit d'immeubles d'habitation collectifs.

Selon une autre caractéristique de l'invention, l'éolienne est équipée, au niveau des entrées d'air de volets motorisés réglables en fonction de la direction et de la vitesse du vent de façon à permettre de régler le débit d'air transféré vers le rotor.

Il s'agit là d'une caractéristique particulièrement avantageuse permettant d'optimiser le rendement de l'éolienne qui fait l'objet de l'invention.

En effet, lorsque les entrées d'air sont libres, le vent s'y engouffre et une partie ressort de l'autre côté par dépression et n'est donc pas utilisée.

Au contraire, selon l'invention, il est possible d'ouvrir les volets orientés dans le sens du vent et de fermer les volets orientés en sens opposé, permettant ainsi de transférer la totalité du vent vers le rotor et de ne pas créer de dépression néfaste pour le rendement de l'éolienne.

A cet effet, et selon une autre caractéristique de l'invention, les volets motorisés coopèrent avec des capteurs de direction du vent ainsi qu'avec des capteurs de vitesse de rotation du rotor.

Ces derniers capteurs permettent d'ouvrir plus ou moins les volets en fonction des caractéristiques du vent de façon à obtenir un débit d'air constant au niveau du rotor et en outre de mettre l'éolienne en sécurité en fermant tous les volets lorsqu'il y a trop de vent.

Les caractéristiques de l'éolienne d'axe vertical qui fait l'objet de l'invention seront décrites plus en détail en se référant aux dessins annexés dans lesquels :
- la figure 1 est une vue de face d'une éolienne correspondant à la première variante de l'invention,
- la figure 2 est une vue en perspective de l'éolienne représentée sur la figure 1,
- la figure 3 est une coupe schématique illustrant les différents éléments constitutifs de cette éolienne,
- la figure 4 est une coupe schématique similaire à la figure 3 illustrant les volets réglables,
- la figure 5 est une coupe schématique similaire à la figure 3 mais correspondant à une éolienne conforme à la seconde variante de l'invention,
- les figures 6, 7 et 8 sont des schémas illustrant différents exemples d'implantation de l'éolienne dans un bâtiment.

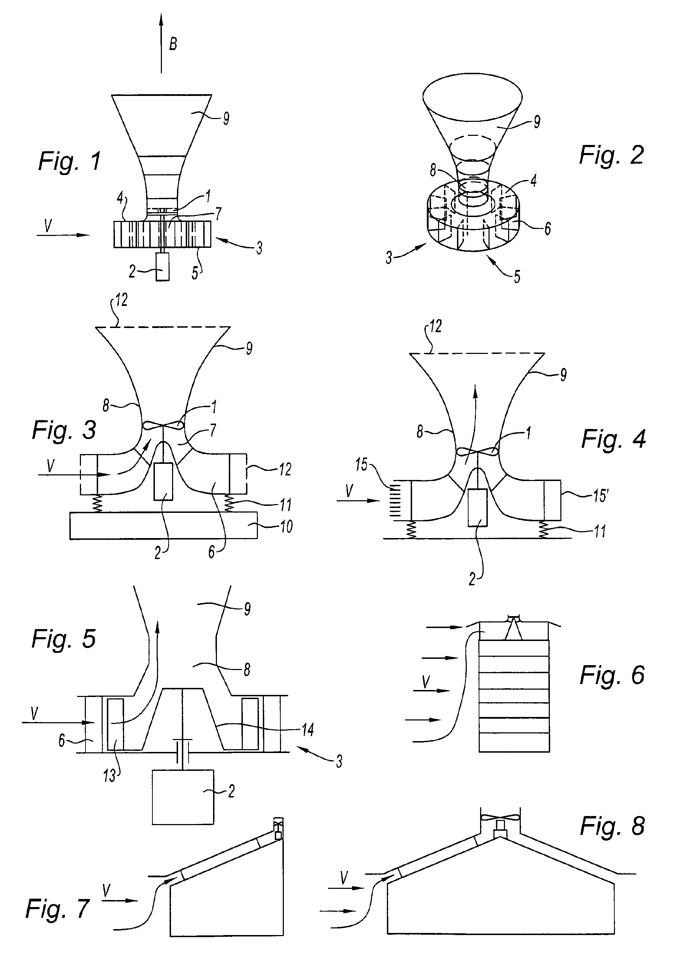

Selon les figures 1, 2 et 3, l'éolienne comporte un rotor constitué par une hélice équipée de pales 1 qui entraîne un aérogénérateur 2 pour fournir de l'énergie électrique.

L'éolienne est en outre équipée d'une embase essentiellement cylindrique 3 permettant la canalisation du vent V.

L'embase 3 est montée coaxialement au rotor 1 et est constituée par deux capots de révolution, à savoir un capot supérieur 4 et un capot inférieur 5 qui sont reliés par une série de plaquettes déflectrices verticales fixes 6.

Les plaquettes déflectrices 6 sont toutes identiques et dirigées radialement.

Le capot inférieur 5 de l'embase 3 est fermé alors que le capot supérieur de celle-ci comporte une ouverture médiane 7 munie à sa partie externe d'une collerette 8 dont la section se rétrécit en allant vers l'extérieur et dans laquelle est logé le rotor 1.

La collerette 8 se prolonge vers l'extérieur par une cheminée conique divergente 9.

Les plaquettes déflectrices 6 permettent de guider le vent V qui pénètre dans l'embase 3 par la surface latérale de cette embase vers la partie centrale de celle-ci et vers l'ouverture médiane 7 du capot supérieur 4 en l'accélérant, ce qui permet d'améliorer le rendement de l'éolienne.

La présence de la cheminée conique divergente 9 permet de diriger les bruits vers le haut comme schématisé par la flèche B sur la figure 1.

Selon la figure 3, l'embase 3 est fixée à un support 10 par l'intermédiaire de plots élastiques 11 qui permettent de limiter l'émission de bruits vers le bas.

La surface latérale de l'embase 3 ainsi que l'ouverture supérieure de la cheminée conique divergente 9 sont fermées par des grilles 12.

Selon la figure 4, l'éolienne est équipée de volets motorisés réglables 15, 15' au niveau des entrées d'air.

Les volets 15 situés dans le sens du vent V sont plus ou moins ouverts de façon à obtenir un débit d'air constant au niveau du rotor 1.

Les volets 15' opposés au sens du vent V sont au contraire fermés pour que la totalité du vent puisse être utilisée par l'éolienne.

Selon la figure 5, le rotor de l'éolienne n'est pas constitué par une hélice équipée de pales, mais par une turbine à aubes verticales 13 montée à la partie interne de l'embase 3, au centre de cette embase et en arrière des plaquettes déflectrices 6.

Les aubes 13 sont solidaires d'un plateau 14 qui entraîne l'aérogénérateur 2.

Selon la figure 6, l'éolienne est intégrée au dernier étage d'un immeuble d'habitation.

Selon la figure 7, l'éolienne est intégrée dans un bâtiment ayant un toit à une seule pente.

Selon la figure 8, l'éolienne est intégrée dans un bâtiment ayant un toit à double pente.

## Revendications

1. Eolienne d'axe vertical comportant un rotor actionné par le vent ainsi qu'un aérogénérateur coopérant avec le rotor pour fournir de l'énergie électrique,
**caractérisée en ce qu'**
- elle est intégrée dans la construction d'un bâtiment et en particulier implantée au dernier étage d'un immeuble d'habitation collective, en zone urbaine, et
- elle est équipée d'une embase de canalisation du vent (3) essentiellement cylindrique, montée coaxialement au rotor (1 ; 13, 14) et constituée par deux capots de révolution, à savoir un capot supérieur (4) muni d'une ouverture médiane (7) et un capot inférieur (5) fermé, reliés par une série de plaquettes déflectrices verticales fixes (6) identiques dirigées radialement de façon à permettre de guider le vent pénétrant dans l'embase de canalisation (3) par la surface latérale de cette embase vers la partie centrale de celle-ci et l'ouverture médiane (7) du capot supérieur (4) en l'accélérant.

2. Eolienne selon la revendication 1,
**caractérisée en ce que**
l'ouverture médiane (7) du capot supérieur (4) est munie à sa partie externe d'une collerette (8) dont la section se rétrécit de préférence en allant vers l'extérieur.

3. Eolienne selon la revendication 2,
**caractérisée en ce que**
le rotor est constitué par une hélice équipée de pales (1) logée dans la collerette (8) et entraînant l'aérogénérateur (2).

4. Eolienne selon l'une quelconque des revendications 1 et 2,
**caractérisée en ce que**
le rotor est constitué par une turbine à aubes verticales (13) montée à la partie interne de l'embase de canalisation du vent (3), au centre de cette embase, et dont les aubes (13) sont solidaires d'un plateau (14) qui entraîne l'aérogénérateur (2).

5. Eolienne selon l'une quelconque des revendications 1 à 4,
**caractérisée en ce que**
la collerette (8) se prolonge vers l'extérieur par une cheminée conique divergente (9).

6. Eolienne selon l'une quelconque des revendications 1 à 5,
**caractérisée en ce que**
l'embase de canalisation du vent (3) ou l'ensemble embase/rotor/aérogénérateur est fixé à un support (10) par l'intermédiaire de plots élastiques (11).

7. Eolienne selon l'une quelconque des revendications 1 à 6,
**caractérisée en ce que**
les entrées et les sorties d'air sont équipées de grilles de protection (12).

8. Eolienne selon l'une quelconque des revendications 1 à 7,
**caractérisée en ce qu'**
elle est équipée au niveau des entrées d'air de volets motorisés (15, 15') réglables en fonction de la direction et de la vitesse du vent de façon à permettre de réguler le débit d'air transféré vers le rotor.

9. Eolienne selon la revendication 8,
**caractérisée en ce que**
les volets motorisés (15, 15') coopèrent avec des capteurs de direction du vent ainsi qu'avec des capteurs de vitesse de rotation du rotor.
